# EUROPÄISCHE PATENTSCHRIFT

(11) **EP 2 345 353 B1**
(45) Veröffentlichungstag und Bekanntmachung des Hinweises auf die Patenterteilung: **16.01.2013**
(21) Anmeldenummer: 10192487.6
(22) Anmeldetag: 25.11.2010
(51) Int. Cl.: A47J 31/44

(54) **Getränkeautomat**
Drinks machine
Automate à boissons

(30) Priorität: 14.01.2010 DE 102010004624
(43) Veröffentlichungstag der Anmeldung: 20.07.2011
(73) Patentinhaber: wmf consumer electric GmbH, 89343 Jettingen-Scheppach (DE)
(72) Erfinder: Gierth, Rolf, 89331, Burgau (DE); Höhne, Joachim, 89331, Burgau (DE)
(74) Vertreter: BRP Renaud & Partner

(56) Entgegenhaltungen:
- EP-A1- 1 870 003
- DE-A1-102005 010 599

## Beschreibung

Die vorliegende Erfindung betrifft einen Getränkeautomat, insbesondere einen Kaffeevollautomat oder einen Padkaffeeautomat, gemäß dem Oberbegriff des Anspruchs 1.

Aus der EP 1 870 003 A1 ist ein gattungsgemäßer Getränkeautomat mit einer Milchaufschäumeinrichtung bekannt, die in einem Gehäuse des Getränkeautomaten angeordnet ist. Die Milchaufschäumeinrichtung weist dabei eine Mischkammer auf, die stromabwärts mit einer Dampfzuleitung und mit einer Milch- und/oder Milch-Luft-Zuleitung in Verbindung steht. Des Weiteren ist stromab der Mischkammer eine Auslasseinrichtung vorgesehen, die mehrere Auslasskanäle aufweist. Um einen austretenden Milchschaumstrahl verbessern zu können, sind die Auslassöffnungen der Auslasskanäle in einem Winkel zur Querschnittsebene des Auslasskanals geneigt, wobei die Neigungswinkel der Auslassöffnungen der Auslasskanäle den gleichen Scheitelpunkt aufweist.

Aus der EP 1 967 101 A1 ist eine Heißwassereinheit für einen Heißgetränkezubereiter mit Milchschäumer bekannt. Ein Boiler des Heißgetränkezubereiters erzeugt dabei Brühwasser, während ein nachgeschalteter Verdampfer das erhitzte Brühwasser verdampft. Durch das in Reihe schalten von Verdampfer und Boiler soll Brühwasser bzw. Wasserdampf schnell in beliebiger Reihenfolge und ohne lange Wartezeiten bereitgestellt werden können.

Nachteilig bei den bekannten Getränkeautomaten mit Milchaufschäumeinrichtungen ist oftmals, dass eine Milch-Luft-Zulaufleitung nach einem Abnehmen durch einen Nutzer zum Reinigen nicht mehr exakt montiert wird und dadurch nur Milchschaum minderer Qualität erzeugt werden kann. Die Milch-Luft-Zulaufleitung ist dabei, insbesondere aufgrund der gummiartigen Ausbildung der Mischkammer, hinsichtlich ihrer Lage nicht eindeutig festgelegt, wobei zusätzlich die meist zu geringe Sorgfalt des Nutzers bei der Montage die Qualität, die Menge und die Temperatur des entstehenden Milchschaums negativ beeinflussen. Zur Herstellung von qualitativ hochwertigem Milchschaum ist es jedoch erforderlich, der Mischkammer einen Milch-Luft-Strom mit definierten Anteilen von Milch und Luft zuzuführen. Die Festlegung des Luftanteils erfolgt dabei im Wesentlichen über einen in einem Adapterelement angeordneten Luftkanal. In Verbindung mit umlaufenden und in der Mischkammer integrierten Dichtringen wird dabei ein Querschnitt des Luftkanals festgelegt und dadurch die Ansaug-Luftmenge bestimmt, die maßgeblich verantwortlich für die Qualität des Milchschaums ist.

Die vorliegende Erfindung beschäftigt sich mit dem Problem, für einen gattungsgemäßen Getränkeautomaten eine verbesserte oder zumindest eine alternative Ausführungsform anzugeben, die sich insbesondere durch eine leichte Handhabung und gleichzeitig eine hohe Milchschaumqualität auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einem Getränkeautomaten mit einer Milchaufschäumeinrichtung eine vordefinierte und exakt bestimmte Einbaustellung einer Milch-Luft-Zulaufleitung zu erzwingen und dadurch zu gewährleisten, dass diese stets gleich eingebaut ist, woraus eine hohe Qualität des zu erzeugenden Milchschaums resultiert. Der Getränkeautomat, welcher bspw. als Kaffeevollautomat ausgebildet sein kann, weist dabei ein Gehäuse mit der darin angeordneten und eine eine Mischkammer aufweisende Milchaufschäumeinrichtung auf. Die Mischkammer ist dabei eingangsseitig mit einer Dampfzuleitung und der Milch-Luft-Zulaufleitung verbunden, wobei die Milch-Luft-Zulaufleitung einen flexiblen Milchschlauch sowie ein endseitig daran angeordnetes Adapterelement zum Anschluss an die Mischkammer besitzt. Über den vergleichsweise flexiblen Milchschlauch ist dabei ein steifes Rohrelement geschoben, das den Milchschlauch umhüllt und gleichzeitig stabilisiert und welches an einem Ende mit dem Adapterelement lösbar fest verbunden ist. Zusätzlich sind im Gehäuse des Getränkeautomaten eine Führung sowie zumindest eine weitere Zentrierung vorgesehen, die ein einfaches Trennen von der Mischkammer und ein leichtes und exaktes Verbinden der Milch-Luft-Zulaufleitung mit der Mischkammer ermöglichen. Die Führung im Gehäuse des Getränkeautomaten sowie die zumindest eine weitere Zentrierung erzwingen somit eine exakt definierte Einführbewegung der Milch-Luft-Zulaufleitung in das Gehäuse des Getränkeautomaten und eine genaue Ausrichtung, wodurch ein exaktes Verbinden der Milch-Luft-Zulaufleitung mit der Mischkammer der Milchaufschäumeinrichtung erreicht werden kann. Mit dem erfindungsgemäß vorgesehenen steifen Rohrelement ist somit ein einfaches Entnehmen der Milch-Luft-Zulaufleitung aus dem Getränkeautomaten, bspw. zu Reinigungszwecken, möglich, wobei anschließend durch die Führung im Gehäuse des Getränkeautomaten sowie die zumindest eine weitere Zentrierung ein vergleichsweise einfaches, jedoch äußerst exaktes Verbinden, d. h. Wiedermontieren, der Milch-Luft-Zulaufleitung am Getränkeautomaten gewährleistet und dadurch selbst bei nicht sorgfältigen Nutzern eine hohe Milchschaumqualität erreicht werden kann. Die Verbindung des steifen Rohrelements und der gehäuseseitigen Führung bzw. der zumindest einen weiteren Zentrierung, erlaubt die Montage der Milch-Luft-Zulaufleitung an der Mischkammer in ausschließlich einer einzigen, korrekten Einbaulage, was bisher durch die Verwendung von flexiblen Milchschläuchen und nur kurzem Adapterelementen nicht hinreichend gewährleistet werden konnte. Ein derartiges erfindungsgemäßes Rohrelement sowie die gehäuseseitige Führung bzw. Zentrierung können dabei bspw. aus Kunststoff kostengünstig hergestellt werden, wobei der damit erreichbare Zusatznutzen eine hohe Komfortsteigerung für den Nutzer bietet.

Bei einer vorteilhaften Weiterbildung der erfindungsgemäßen Lösung, ist am dem Adapterelement abgewandten Ende des Rohrelementes ein Drehgriff angeordnet, mittels welchem sich das Rohrelement um seine Mittelachse verdrehen lässt und der gleichzeitig einen Positionshinweis für die korrekte Verbindung zwischen Adapterelement und Mischkammer beim Einstecken der Milch-Luft-Zulaufleitung in das Gehäuse des Getränkeautomaten bildet. Hierbei ist zu beachten, dass das längsendseitig des Milchschlauchs angeordnete Adapterelement hinreichend drehfest mit dem Rohrelement und damit auch drehfest mit dem Drehgriff verbunden ist, sodass ein Verdrehen des Drehgriffs gleichzeitig ein Verdrehen des Adapterelementes in einer Aufnahme der Mischkammer bedeutet. Insbesondere bei einem keilförmig ausgebildeten Luftkanal und in Verbindung mit einem schräg zu der Kanalachse angeordneten Dichtring, kann hierdurch die Luftzufuhr direkt gesteuert und dadurch direkt Einfluss auf das zu erzeugende Milchschaumergebnis genommen werden. Gleichzeitig bildet der Drehgriff einen haptisch erkennbaren Anschlag bei der Montage der Milch-Luft-Zulaufleitung am Getränkeautomaten, sodass der Nutzer haptisch spürbar darauf hingewiesen wird, wenn sich die Milch-Luft-Zulaufleitung in ihrer korrekten Einbauposition befindet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßen Getränkeautomaten in einer Ansicht und einer Detaildarstellung,
- Fig. 2: eine Schnittdarstellung durch den erfindungsgemäßen Getränkeautomaten im Bereich einer Milchaufschäumeinrichtung,
- Fig. 3: eine Ansicht sowie eine Detailansicht auf ein erfindungsgemäßes Rohrelement zur Aussteifung eines flexiblen Milchschlauchs,
- Fig. 4: eine Detailschnittdarstellung im Anschlussbereich einer Milch-Luft-Zulaufleitung an eine Mischkammer der Milchaufschäumeinrichtung,
- Fig. 5: eine Explosionsdarstellung des Anschlussbereichs gemäß der Fig. 4
- Fig. 6: eine Darstellung wie in Fig. 4, jedoch bei einem Adapterelement mit einem konisch ausgeformten Luftkanal,
- Fig. 7: eine mögliche Nut und Federverbindung zur lageexakten Verbindung des Adapterelements mit dem Rohrelement.

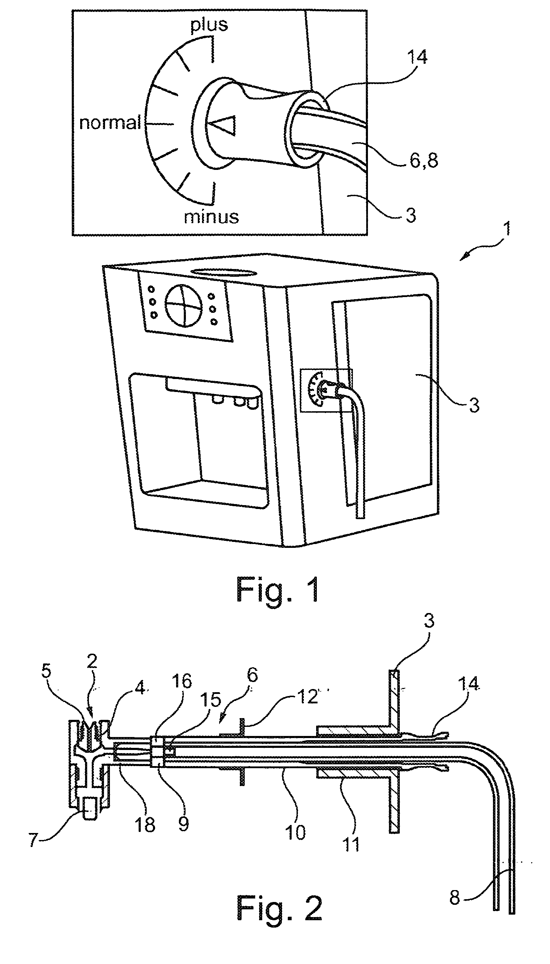

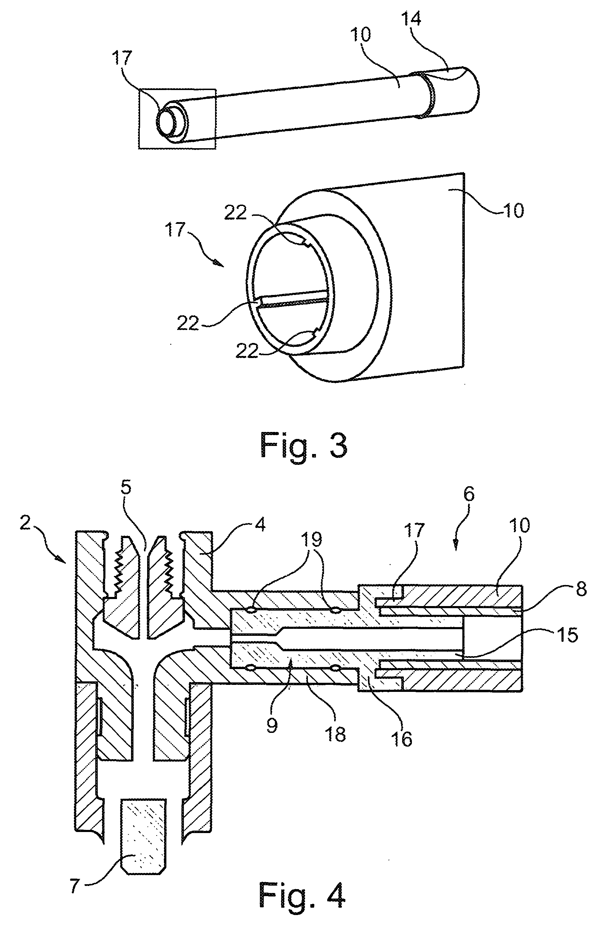

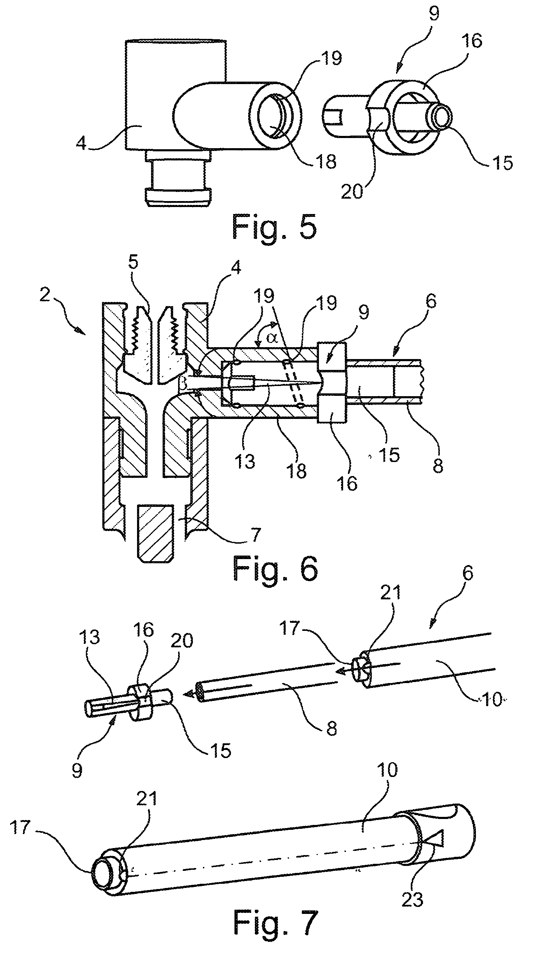

Entsprechend den Figuren 1 und 2, weist ein erfindungsgemäßer Getränkeautomat 1, bspw. ein Kaffeevollautomat oder ein Padkaffeeautomat, eine Milchaufschäumeinrichtung 2 auf, die in einem Gehäuse 3 des Getränkeautomaten 1 angeordnet ist. Die Milchaufschäumeinrichtung 2 besitzt in bekannter Weise eine Mischkammer 4, die eingangsseitig mit einer Dampfzuleitung 5 sowie mit einer Milch-Luft-Zuleitung 6 in Verbindung steht. Ausgangsseitig ist die Mischkammer 4 mit einem Auslass 7 verbunden, über welchen der in der Mischkammer 4 produzierte Milchschaum, bspw. auf einen Cappuccino, ausgegeben werden kann. Die Milch-Luft-Zulaufleitung 6 umfasst dabei einen flexiblen Milchschlauch 8 (vgl. insbesondere die Fig. 2 und 4) sowie ein endseitig daran angeordnetes Adapterelement 9 zum Anschluss an die Mischkammer 4. Zur Reinigung der Milch-Luft-Zulaufleitung 6 kann diese von der Mischkammer 4 abgezogen und aus dem Gehäuse 3 des Getränkeautomaten 1 herausgezogen werden. Zur Erzeugung von qualitativ hohem Milchschaum ist jedoch nach der Reinigung der Milch-Luft-Zulaufleitung 6 wieder eine korrekte Montage derselben an der Mischkammer 4 erforderlich. Aus diesem Grund ist erfindungsgemäß ein, verglichen mit dem flexiblen Milchschlauch 8, steifes Rohrelement 10 vorgesehen, das den Milchschlauch 8 umhüllt und stabilisiert und das an einem Ende mit dem Adapterelement 9 verbunden ist. Gleichzeitig sind im Gehäuse 3 des Getränkeautomats 1 eine Führung 11 sowie eine weitere Zentrierung 12 vorgesehen, die insbesondere die Montage, das heißt also bspw. ein Verbinden nach einem zuvor erfolgten Reinigen der Milch-Luft-Zulaufleitung 6 mit der Mischkammer 4 erleichtern (vgl. insbesondere Fig. 2). Im Vergleich zu bisher aus dem Stand der Technik bekannten Getränkeautomaten, bei welchen aufgrund der lediglich flexiblen Mischkammer mit der zylinderförmigen Aufnahme eine genaue und insbesondere exakte Montage nur schwer möglich war, wird dies mittels des erfindungsgemäßen Rohrelementes 10 und der Führung 11 bzw. der Zentrierung 12 problemlos ermöglicht. Da das Adapterelement 9 durch einen an bzw. in diesem angeordneten Luftkanal 13 (vgl. Fig. 6) zugleich für die in die Mischkammer 4 eingebrachte Luftmenge verantwortlich ist, ist eine exakte Montage des Adapterelements 9 und damit der Milch-Luft-Zulaufleitung 6 an der Mischkammer 4 der Milchaufschäumeinrichtung 2 essentiell.

Betrachtet man insbesondere die Fig. 2, so kann man erkennen, dass an dem, dem Adapterelement 9 abgewandten Ende des Rohrelementes 10 ein Drehgriff 14 angeordnet ist, mittels welchem sich das Rohrelement 10 und mit diesem auch das Adapterelement 9 verdrehen lassen, wobei ein axialer Anschlag zwischen Adapterelement 9 und der zylinderförmigen Aufnahme 18 der Mischkammer 4 gewährleistet sein muss. Der geringe Abstand zwischen Drehgriff 14 des Rohrelements 10 und dem Gehäuse 3 gibt dabei Aufschluss über die funktionsgerechte Position des Adapeterelements 9 in der Mischkammer 4.

Bei der Detailschnittdarstellung gemäß der Fig. 4 lässt sich erkennen, dass das Adapterelement 9 einen Milchschlauchstutzen 15 aufweist, der bei montierter Milch-Luft-Zulaufleitung 6 in den Milchschlauch 8 eingeführt und insbesondere in diesem flüssigkeits- und luftdicht verspannt ist. Zusätzlich weist das Adapterelement 9 einen Aufnahmering 16 auf, der einen radial zurückgesetzten Stirnbereich 17 des Rohrelementes 10 umfasst, wobei der Milchschlauch 8 zwischen dem Milchschlauchstutzen 15 einerseits und dem Rohrelement 10 bzw. dem Aufnahmering 16 andererseits eingeklemmt ist.

Wie bereits eingangs erwähnt, ist im Adapterelement 9 ein Luftkanal 13 zum Zumischen von Luft zum angesaugten Milchstrom vorgesehen, wobei der Luftkanal 13 insbesondere in der Art einer Oberflächennut ausgebildet sein kann. Denkbar ist auch, dass der Luftkanal 13 einen konstanten oder aber einen längenveränderlichen Querschnitt aufweist, das heißt insbesondere keilförmig ausgebildet ist, wie dies bspw. gemäß der Fig. 6 dargestellt ist. Die keilförmige Ausführung wird dabei durch den Keilwinkel β definiert.

Wie insbesondere den Figuren 4 und 6 zu entnehmen ist, ist in einer Aufnahme 18 der Mischkammer mindestens ein Dichtring 19 angeordnet, welcher dazu dient, das Adapterelement 9 gegenüber einer zylinderförmigen Aufnahme 18 der Mischkammer 4 abzudichten. Die beiden, in der dargestellten Ausführung vorgesehenen Dichtringe 19 können dabei koaxial zum Adapterelement 9 angeordnet sein, wobei insbesondere auch vorgesehen sein kann, dass einer der beiden Dichtringe 19a schräg zur Achse der Aufnahme 18 angeordnet ist. Der schräg zur Achse der Aufnahme 18 angeordnete Dichtring 19a bewirkt dabei zusammen mit dem keilförmig ausgebildeten Luftkanal 13 ein Verändern eines Lufteinlassquerschnitts, sofern das Adapterelement 9, bspw. über den Drehgriff 14 verdreht wird. Mit der Anordnung des keilförmigen Luftkanals 13 kann der wirksame Kanalquerschnitt für die Luftzufuhr demzufolge gezielt beeinflusst werden, wobei dann der in der Aufnahme 18 angeordneten Dichtring 19a mit dem Schrägungswinkel α schräg positioniert sein muss. Durch Verdrehen des Adapterelements 9 in der Aufnahme 18 wird die Position des Dichtringes 19a zum keilförmigen Luftkanal 13 variiert. Dadurch ändert sich dessen Breite in Bezug auf die jeweilige Lage und wirksame Segmentlänge des schräg umlaufenden Dichtringes 19a entsprechend der Drehposition und beeinflusst damit den wirksamen Lufteinlassquerschnitt. Ein Teil des Luftkanals 13 kann dabei bspw. auch als Freischliff ausgebildet sein. Betrachtet man die Fig. 1, so kann man erkennen, dass bspw. durch ein Verdrehen des Drehgriffs 14 im Uhrzeigersinn, der Lufteinlassquerschnitt vergrößert wird, während er bei einem Verdrehen entgegen dem Uhrzeigersinn verringert wird. Durch diese drehbare Steuerung sind die Qualität des Milchschaums (Bläschengröße) sowie auch die Temperatur des Milch-Milchschaum-Gemischs variierbar.

Eine drehfeste Verbindung zwischen dem Adapterelement 9 einerseits und dem Drehgriff 14 andererseits kann bspw. über eine am Aufnahmering 16 vorgesehene Nut 20 bewerkstelligt werden, in welche eine am Rohrelement 10 angeordnete Feder 21 eingreift und dadurch eine drehfeste Verbindung herstellt. Selbstverständlich ist dabei auch denkbar, dass die Nut 20 am Rohrelement 10 und die zugehörige Feder 21 am Adapterelement 9 angeordnet sind. Die Position der Feder 21 kann bspw. durch eine axial fluchtend dazu angeordnete Markierung 23 (vgl. Fig. 7) angezeigt werden, wodurch der Montagevorgang zusätzlich erleichtert wird.

Betrachtet man die Fig. 3, so kann man am Rohrelement radial nach innen stehende Längsrippen 22 erkennen, wovon gemäß der Fig. 3 insgesamt mindestens drei angeordnet sind, und welche in Verbindung mit dem flexiblen Milchschlauch 8 eine so hohe Flächenpressung erzeugen, dass eine kraftschlüssige, gute Verbindung zwischen dem Adapterelement 9 und dem Rohrelement 10 erzeugt werden kann. Dies ermöglicht es insbesondere auch, dass die Milch-Luft-Zulaufleitung 6 zusammen mit dem Adapterelement 9 über den Drehgriff 14 aus der Aufnahme 18 der Mischkammer 4 und aus dem Gehäuse 3 des Getränkeautomaten 1 herausgezogen, insbesondere zur Reinigung entnommen werden kann. Ebenso problemlos gestaltet sich die Montage der Milch-Luft-Zulaufleitung 6 am Getränkeautomaten 1 nach erfolgter Reinigung. Die Dichtringe 19 bzw. 19a in der Aufnahme 18 der Mischkammer 4 bewirken dabei nicht nur eine Dichtwirkung, sondern zugleich auch eine gewisse Führung des Adapterelements 9 in der Aufnahme 18.

Mit dem erfindungsgemäßen Getränkeautomaten 1 ist somit eine einfache Montage und Demontage und damit auch eine einfache Reinigung der Milch-Luft-Zulaufleitung 6 möglich, wobei aufgrund der erfindungsgemäßen Ausgestaltung mit dem Rohrelement 10, der Führung 11 und der Zentrierung 12 lediglich eine mögliche Einbauposition besteht, die zugleich eine hohe Milchschaumqualität gewährleistet. Sämtliche hierfür erforderlichen Änderungen am Gehäuse 3 bzw. an der Milch-Luft-Zulaufleitung 6 sind dabei kostengünstig zu realisieren.

## Patentansprüche

1. Getränkeautomat (1), insbesondere ein Kaffeevollautomat, mit einem Gehäuse (3) und einer darin angeordneten und eine Mischkammer (4) aufweisenden Milchaufschäumeinrichtung (2), wobei
- die Mischkammer (4) eingangsseitig mit einer Dampfzuleitung (5) und einer Milch-Luft-Zuleitung (6) in Verbindung steht,
- die Milch-Luft-Zuleitung (6) einen flexiblen Milchschlauch (8) sowie ein endseitig daran angeordnetes Adapterelement (9) zum Anschluss an die Mischkammer (4) aufweist,
**dadurch gekennzeichnet, dass**
- ein verglichen mit dem flexiblen Milchschlauch (8) steifes Rohrelement (10) vorgesehen ist, das den Milchschlauch (8) umhüllt und stabilisiert und das an einem Ende mit dem Adapterelement (9) verbunden ist,
- im Gehäuse (3) des Getränkeautomatens (1) eine Führung (11) sowie eine weitere Zentrierung (12) vorgesehen sind, die ein einfaches und genaues Trennen und Verbinden der Milch-Luft-Zulaufleitung (6), insbesondere zu Reinigungszwecken, von und mit der Mischkammer (4) ermöglicht.

2. Getränkeautomat nach Anspruch 1,
**dadurch gekennzeichnet,**
**dass** am dem Adapterelement (9) abgewandten Ende des Rohrelements (10) ein Drehgriff (14) angeordnet ist, mittels welchem sich das Rohrelement (10) verdrehen lässt und der gleichzeitig einen Positionshinweis für das korrekte Einstecken der Milch-Luft-Zulaufleitung (6) in das Gehäuse (3) des Getränkeautomatens (1) ermöglicht.

3. Getränkeautomat nach Anspruch 1 oder 2,
**dadurch gekennzeichnet,**
- **dass** das Adapterelement (9) einen Milchschlauchstutzen (15) aufweist, der bei montierter Milch-Luft-Zulaufleitung (6) in den Milchschlauch (8) eingeführt ist,
- **dass** das Adapterelement (9) einen Aufnahmering (16) aufweist, der einen radial zurückgesetzten Stirnbereich (17) des Rohrelements (10) umfasst, wobei der Milchschlauch (8) zwischen dem Milchschlauchstutzen (15) einerseits und dem Rohrelement (10) und dem Aufnahmering (16) andererseits eingeklemmt ist.

4. Getränkeautomat nach einem der Ansprüche 1 bis 3,
**dadurch gekennzeichnet,**
**dass** im/am Adapterelement (9) ein nutförmiger Luftkanal (13) zum Zumischen von Luft zur Milch vorgesehen ist.

5. Getränkeautomat nach Anspruch 4,
**dadurch gekennzeichnet,**
**dass** der Luftkanal (13) in Verbindung mit einem Dichtring (19a) einen längsveränderlichen Querschnitt aufweist, insbesondere keilförmig ausgebildet ist.

6. Getränkeautomat nach einem der Ansprüche 1 bis 5,
**dadurch gekennzeichnet,**
**dass** am Adapterelement (9), insbesondere am Aufnahmering (16), eine Nut (20) vorgesehen ist, welche mit einer am Rohrelement (10) angeordneten Feder (21) zusammenwirkt und dadurch eine drehfeste Verbindung ermöglicht.

7. Getränkeautomat nach einem der Ansprüche 1 bis 6,
**dadurch gekennzeichnet,**
**dass** das Adapterelement (9) über zumindest einen Dichtring (19) in einer zylinderförmigen Aufnahme (18) der Mischkammer (4) dicht eingesteckt ist.

8. Getränkeautomat nach Anspruch 7,
**dadurch gekennzeichnet,**
**dass** die Milch-Luft-Zulaufleitung (6) über zumindest zwei Dichtringe (19 bzw. 19a) in der Aufnahme (18) der Mischkammer (4) dicht eingesteckt ist, wobei einer der Dichtringe (19a) schräg zur Achse der Aufnahme (18) angeordnet ist.

9. Getränkeautomat nach Anspruch 8,
**dadurch gekennzeichnet,**
**dass** der Luftkanal (13) keilförmig ausgebildet ist und sich aufgrund des schräg angeordneten, gehäusefesten Dichtrings (19a) ein Lufteinlassquerschnitt durch ein Verdrehen des Adapterelements (9) einstellen lässt.

10. Getränkeautomat nach einem der Ansprüche 1 bis 9,
**dadurch gekennzeichnet,**
**dass** der Luftkanal (13) zumindest bereichsweise als Freischliff ausgebildet ist.

## Claims

1. A beverage machine (1), in particular a fully automatic coffee machine, comprising a housing (3) and a milk frothing device (2), which is arranged therein and which encompasses a mixing chamber (4), wherein
- the mixing chamber (4) is in contact with a steam feed line (5) and with a milk-air feed line (6) on the inlet side,
- the milk-air feed line (6) encompasses a flexible milk tube (8) as well as an adapter element (9) arranged on the end side thereof for connecting to the mixing chamber (4),
**characterized in that**
- provision is made for a pipe element (10), which is stiff as compared to the flexible milk tube (8), which surrounds and stabilizes the milk tube (8) and which is connected to the adapter element (9) on one end,
- provision are made in the housing (3) of the beverage machine (1) for a guide (11) as well as for a further centering (12), which provides for a simple and accurate disconnection and connection of the milk-air feed line (6), in particular for cleaning purposes, from and to the mixing chamber (4).

2. The beverage machine according to claim 1,
**characterized in**
**that** a rotary handle (14), by means of which the pipe element (10) can be turned and which simultaneously provides for position information for the correct insertion of the milk-air feed line (6) into the housing (3) of the beverage machine (1), is arranged on the end of the pipe element (10), which faces away from the adapter element (9).

3. The beverage machine according to claim 1 or 2,
**characterized in**
- **that** the adapter element (9) encompasses a milk tube nozzle (15), which is inserted into the milk tube (8) in response to the assembled milk-air feed line (6),
- **that** the adapter element (9) encompasses a supporting ring (16), which comprises a radially offset front area (17) of the pipe element (10), wherein the milk tube (8) is clamped between the milk tube nozzle (15) on the one side and the pipe element (10) and the supporting ring (16) on the other side.

4. The beverage machine according to one of claims 1 to 3,
**characterized in**
**that** a groove-shaped air duct (13) for adding air to the milk is provided in/on the adapter element (9).

5. The beverage machine according to claim 4,
**characterized in**
**that** the air duct (13), in connection with a sealing ring (19a), encompasses a longitudinally variable cross section, is in particular embodied in a wedge-shaped manner.

6. The beverage machine according to one of claims 1 to 5,
**characterized in**
**that** provision is made on the adapter element (9), in particular on the supporting ring (16), for a groove (20), which cooperates with a spring (21), which is arranged on the pipe element (10), and which thus provides for a non-rotatable connection.

7. The beverage machine according to one of claims 1 to 6, **characterized in**
**that** the adapter element (9) is inserted tightly in a cylindrical accommodation (18) of the mixing chamber (4) via at least one sealing ring (19).

8. The beverage machine according to claim 7,
**characterized in**
**that** the milk-air feed line (6) is inserted tightly in the accommodation (18) of the mixing chamber (4) via at least two sealing rings (19 or 19a, respectively), wherein one of the sealing rings (19a) is arranged diagonally to the axis of the accommodation (18).

9. The beverage machine according to claim 8,
**characterized in**
**that** the air duct (13) is embodied in a wedge-shaped manner and that an air inlet cross section can be adjusted by rotating the adapter element (9) due to the sealing ring (19a), which is fixed to the housing and which is arranged diagonally.

10. The beverage machine according to one of claims 1 to 9,
**characterized in**
**that** the air duct (13) is embodied as a free grinding at least area by area.

## Revendications

1. Distributeur automatique de boissons (1), notamment distributeur de café entièrement automatique, avec un corps (3) et un moussoir à lait (2) disposé dans ce dernier et comportant un compartiment à lait (4),
- le compartiment à lait (4) étant en liaison côté entrée avec un conduit d'alimentation de vapeur (5) et un conduit d'alimentation de lait et d'air (6),
- le conduit d'alimentation de lait et d'air (6) comportant un flexible à lait (8), ainsi qu'un élément adaptateur (9) disposé côté extrémité sur ce dernier pour le raccordement sur le compartiment à lait (4),
**caractérisé**
- **en ce qu'**il est prévu un élément tubulaire rigide (10) en comparaison du flexible à lait (8), qui enveloppe et stabilise le flexible à lait (8) et qui sur une extrémité est relié à l'élément adaptateur (9),
- **en ce que** dans le corps (3) du distributeur automatique de boissons (1) est prévu un guidage (11) ainsi qu'un centrage (12) supplémentaire qui permet une désolidarisation et un raccordement simples et précis du conduit d'alimentation de lait et d'air (6), notamment à des fins de nettoyage, à partir de et avec le compartiment à lait (4).

2. Distributeur automatique de boissons selon la revendication 1, **caractérisé en ce que** sur l'extrémité de l'élément tubulaire (10) qui est opposée à l'élément adaptateur (9) est disposée une poignée rotative (14), à l'aide de laquelle on peut faire tourner l'élément tubulaire (10) et qui permet simultanément une indication de position pour l'insertion correcte du conduit d'alimentation de lait et d'air (6) dans le corps (3) du distributeur de boissons (1).

3. Distributeur automatique de boissons selon la revendication 1 ou 2, **caractérisé en ce que**
- l'élément adaptateur (9) comporte une tubulure (15) pour flexible à lait qui, lorsque le conduit d'alimentation de lait et d'air (6) est monté, est introduit dans le flexible à lait (8),
- l'élément adaptateur (9) comporte une bague de logement (16) qui entoure une zone frontale (17) en retrait en direction radiale de l'élément tubulaire (10), le flexible à lait (8) étant coincé entre la tubulure (15) de flexible à lait d'une part et l'élément tubulaire (10) et la bague de logement (16) d'autre part.

4. Distributeur automatique de boissons selon l'une quelconque des revendications 1 à 3, **caractérisé en ce que** dans/sur l'élément adaptateur (9), il est prévu un canal d'air (13) en forme de rainure, pour rajouter de l'air au lait.

5. Distributeur automatique de boissons selon la revendication 4, **caractérisé en ce que** le canal d'air (13) en liaison avec une bague d'étanchéité (19a) présente une section transversale à longueur variable, notamment **en ce qu'**il est conçu de manière cunéiforme.

6. Distributeur automatique de boissons selon l'une quelconque des revendications 1 à 5, **caractérisé en ce que** sur l'élément adaptateur (9), notamment sur la bague de logement (16), il est prévu une rainure (20) qui coopère avec un ressort, (21) disposé sur l'élément tubulaire (10) et qui permet de ce fait une liaison solidaire en rotation.

7. Distributeur automatique de boissons selon l'une quelconque des revendications 1 à 6, **caractérisé en ce que** l'élément adaptateur (9) est inséré de manière étanche dans un logement (18) cylindrique du compartiment à lait (4) par l'intermédiaire d'au moins une bague d'étanchéité (19).

8. Distributeur automatique de boissons selon la revendication 7, **caractérisé en ce que** le conduit d'alimentation de lait et d'air (6) est inséré de manière étanche dans le logement (18) du compartiment à lait (4) par l'intermédiaire d'au moins deux bagues d'étanchéité (19 ou 19a), l'une (19a) des bagues d'étanchéité étant disposée à l'oblique de l'axe du logement (18).

9. Distributeur automatique de boissons selon la revendication 8, **caractérisé en ce que** le canal d'air (13) est conçu de manière cunéiforme et du fait de la bague d'étanchéité (19a) stationnaire sur le corps et disposée en oblique, une section transversale d'entrée d'air se laisse régler par une rotation de l'élément adaptateur (9).

10. Distributeur automatique de boissons selon l'une quelconque des revendications 1 à 9, **caractérisé en ce que** le canal d'air (13) est conçu au moins par endroits sous forme d'un détalonnage.
